# EUROPÄISCHE PATENTSCHRIFT

(11) **EP 0 791 140 B1**
(45) Veröffentlichungstag und Bekanntmachung des Hinweises auf die Patenterteilung: **19.05.1999**
(21) Anmeldenummer: 95934055.5
(22) Anmeldetag: 13.10.1995
(51) Int. Cl.: F16B 9/02, G10K 11/00

(54) **BEFESTIGUNGSELEMENT FÜR EINEN KÖRPER IN EINER WANDUNG**
SECURING COMPONENT FOR A BODY IN A WALL
ELEMENT PERMETTANT DE FIXER UN CORPS DANS UNE PAROI

(30) Priorität: 08.11.1994 DE 4439797
(43) Veröffentlichungstag der Anmeldung: 27.08.1997
(73) Patentinhaber: Moto Meter GmbH, D-71229 Leonberg (DE)
(72) Erfinder: FAASS, Manfred, D-76327 Pfinztal (DE); SCHNEIDER, Michael, D-76307 Karlsbad (DE)
(74) Vertreter: Friedmann, Jürgen, Dr.-Ing.
(86) Internationale Anmeldenummer: DE9501410
(87) Internationale Veröffentlichungsnummer: WO9614512

(56) Entgegenhaltungen:
- DE-A- 3 812 182
- GB-A- 679 441
- GB-A- 1 581 773
- US-A- 3 545 387

## Beschreibung

### Stand der Technik

Die Erfindung geht aus von einem Befestigungselement für einen in eine Bohrung einer Wandung durchsteckbaren Körper nach der Gattung des Hauptanspruchs. Aus der DE 38 12 182 A1 ist schon ein Ultraschallwandler mit einem zylinderförmigen Körper bekannt, der zur Befestigung durch eine Bohrung in einer Stoßstange eines Kraftfahrzeuges durchgesteckt wird und von der Rückseite her durch ein federndes Element gegen das Herausfallen gesichert ist. Es hat sich gezeigt, daß ein derartiges Element nur in einem eingeschränkten Einbauwinkel zur Wandung eingebaut werden kann. Die verschiedenen Fahrzeugtypen können jedoch sehr unterschiedliche Neigungswinkel zur Fahrbahn aufweisen, so daß - je nach Fahrzeugtyp - unter Umständen verschiedene Befestigungselemente erforderlich sind. Die Fertigung verschiedener Befestigungselemente erhöht jedoch die Fertigungs- und Lagerkosten und sind daher unerwünscht. Weiterhin ist ungünstig, daß der Aufbau des Befestigungselementes mit dem Körper recht schwierig und zeitaufwendig sein kann.

Aus der GB-A-679 441 ist ein Befestigungsclip bekannt, mit dem elektronische Bauteile wie Spulen, Schalter etc. auf einer Trägerplatte befestigbar sind. Der Befestigungsclip besteht aus einem Federteil, das durch entsprechende Öffnungen durch der Trägerplatte geschoben wird. Das zu befestigende Bauteil wird auf der Gegenseite der Trägerplatte in die durchgesteckten Federn des Befestigungsclips geschoben und mit Rastnasen arretiert. Zum Abnehmen des Bauteils sind die Rastnasen mit einem entsprechendem Werkzeug abzuheben, um sie vom Bauteil zu lösen.

Beim Gegenstand der GB-A-1 581 773 wird ein Befestigungs- oder Sicherungsring vorgeschlagen, bei dem federnde Haken in entsprechende Zähne eines Körpers einrastbar sind. Zum Befestigen des Körpers in einer Bohrung einer Platte wird zunächst der Befestigungsclip oder Sicherungsring auf den Körper bis zum Kopfanschlag aufgeschoben. Danach wird der Körper in die vorbereitete Öffnung der Platte gegen den Druck der federnden Haken in die Öffnung der Platte eingeschoben. Zum Lösen muß der Körper von rückwärts gegen den Federdruck der Haken herausgeschoben werden.

Das erfindungsgemäße Befestigungselement mit den kennzeichnenden Merkmalen des Hauptanspruchs hat demgegenüber den Vorteil, daß der Körper auch bei einem großen Neigungswinkel der Wandung in einer vorgegebenen Lage eingebaut werden kann. Besondere Werkzeuge oder Hilfsmittel sind nicht erforderlich. Besonders vorteilhaft ist auch, daß der Ausbau des Körpers ohne besondere Werkzeuge oder Hilfsmittel erfolgen kann, da durch einfachen Druck auf wenigstens einen Teil des Befestigungselements die ineinandergreifenden Rasthaken von den entsprechenden Vertiefungen gelöst werden und das Befestigungselement abnehmbar ist.

Durch die in den abhängigen Ansprüchen aufgeführten Maßnahmen sind vorteilhafte Weiterbildungen und Verbesserungen des im Hauptanspruch angegebenen Befestigungselementes möglich. Besonders vorteilhaft ist, daß durch die Anordnung der Rasthaken vorzugsweise an zwei gegenüberliegenden Seiten diese leicht entriegelt werden können, so daß das Befestigungselement vom Körper heruntergenommen und aus der Bohrung herausgezogen werden kann.

Durch die elastische Ausbildung des Befestigungselementes und den Hohlraum zwischen dem Befestigungselement und dem Körper kann durch einfachen Druck auf diese Stellen die Verriegelung gelöst werden. Das ist besonders günstig an engen Stellen, an denen beispielsweise eine Verschraubung aus Raumgründen nur schwer durchführbar ist.

Eine besonders einfache Ausbildung des Befestigungselementes ergibt die elliptische Form, da an deren Längsseiten leicht gedrückt werden kann und dabei der Durchmesser der elliptischen Öffnung an seiner Schmalseite vergrößert wird. Werden an diesem Durchmesser die Rasthaken angeordnet, dann heben diese sich beim Zusammendrücken von der Oberfläche des Körpers ab. Dieser Vorgang kann leicht an schwer zugänglichen Stellen der Stoßstange oder eines Karosserieteils durchgeführt werden.

Die Ausbildung des Befestigungselementes mit zwei Druckfedern, die mit einem keilförmigen Anlegeteil verbunden sind, ergibt die Möglichkeit, daß eine sichere Befestigung des Körpers auch bei großen Neigungswinkeln relativ zur Wandung eines Karosserieteils möglich ist. Auch in diesen Fällen verteilt sich der Anpreßdruck gleichmäßig auf die beiden Spitzen des Formteils.

Eine besonders einfache Herstellung ergibt sich, wenn das Befestigungselement in einem Teil, beispielsweise aus Kunststoff, gespritzt wird.

Das Befestigungselement eignet sich besonders gut zur Befestigung eines Ultraschallsensors an einem Karosserieteil eines Kraftfahrzeugs, da der Ultraschallsensor zur Vermeidung von Straßenreflexionen einen vorgegebenen Neigungswinkel zur Straßenoberfläche einnehmen muß.

### Zeichnung

Ein Ausführungsbeispiel der Erfindung ist in der Zeichnung dargestellt und in der nachfolgenden Beschreibung näher erläutert. Es zeigen Figur 1 ein Ausführungsbeispiel in Draufsicht, Figur 2 zeigt eine Seitenansicht, und Figur 3 zeigt einen Querschnitt.

### Beschreibung des Ausführungsbeispiels

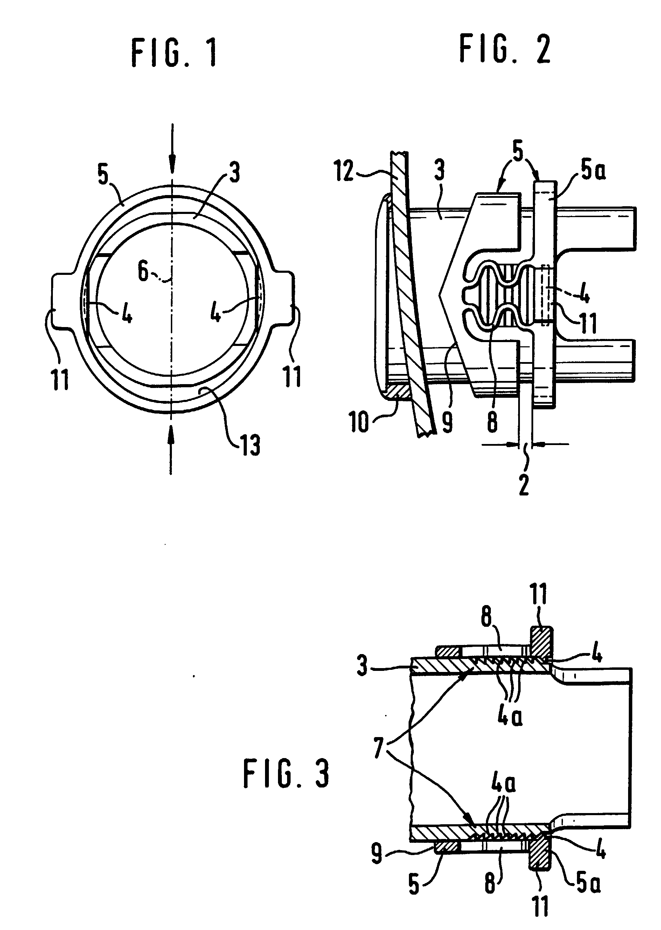

Figur 1 zeigt ein etwa ellipsenförmiges Befestigungselement 5 in Draufsicht, bei dem die vertikale Achse 6 den großen Ellipsendurchmesser und die horizontale Achse den kleinen Ellipsendurchmesser bildet. An der kleinen Ellipsenachse sind rechts und links zwei Druckpunkte 11 dargestellt, an denen das Befestigungselement über einen Körper 3 mit etwa kreisförmigem Querschnitt geschoben wird. Im Bereich der Druckpunkte 11 sind zwischen der Innenseite des Befestigungselementes 5 und der Außenseite des Körpers 3 Rasthaken 4 angeordnet, die im entlasteten Zustand des Befestigungselementes 5 ineinandergreifen. Durch die vorzugsweise elliptische Form entsteht an den Enden der großen Ellipsenhalbachse 6 zwischen dem Befestigungselement 5 und dem Körper 3 ein Hohlraum (elliptische Öffnung 13).

Die Funktionsweise des Ausführungsbeispiels ist in der Seitenansicht der Figur 2 verdeutlicht. Der Körper 3 hat an seinem linken vorderen Teil einen Konturausgleichsring 10, mit dem der Neigungswinkel zu einer Wandung 12 vorgebbar ist und der im eingebauten Zustand als Anschlag dient. Wie der Figur 2 weiter entnehmbar ist, hat das Befestigungselement 5 ein keilförmiges Formteil 9, das über zwei sich gegenüberstehende Druckfedern mit einem rechten Teil 5a des Befestigungselementes 5 verbunden ist. Die Druckfedern 8 sind beispielsweise mäanderförmig ausgebildet und bringen aufgrund ihrer Materialbeschaffenheit und Formgebung einen vorgegebenen Druck auf die Wandung 12 auf. Alternativ können die Druckfedern 8 auch als Schraubenfeder zwischen den beiden Teilen 9, 5a angeordnet sein. Vorzugsweise unterhalb der Druckfedern sind die Rastnasen 4 angeordnet, die in entsprechende Rastungen des Körpers 3 einrasten. Zwischen dem keilförmigen Formteil 9 und dem unteren Teil 5a des Befestigungselementes 5 ist ein Abstand 2 vorgesehen, der als Anschlag beim Festdrücken des Befestigungselementes 5 dient. Die beiden nebeneinanderliegenden Spitzen des keilförmigen Formteils 9 sind zentriert, so daß sie in der Höhe der Mittelachse des Körpers 3 auf die Rückseite der Wandung 12 drücken. Der Keilwinkel ist dabei so ausgebildet, daß der größte gewünschte Einbauwinkel zwischen der Wandung 12 und dem Körper 3 eingestellt werden kann und die Spitzen des Formteils 9 dabei die Druckübertragung auf die Wandung 12 etwa gleichmäßig ausüben.

Figur 3 zeigt einen Querschnitt des Befestigungselementes 5 mit einem oder mehreren Rasthaken 4 an zwei gegenüberliegenden Seiten 7, die in entsprechende Vertiefungen 4a des Körpers 3 einhaken. Der Körper 3 kann beispielsweise ein Gehäuse eines Ultraschallwandlers sein, der für Entfernungsmessungen in einer Stoßstange oder einem Kraftfahrzeug-Karosserieteil zur Abstandsmessung eingebaut wird. Sowohl der Körper 3 als auch das Befestigungselement 5 sind vorzugsweise aus einem Kunststoff gefertigt.

Beim Aufschieben des Befestigungselementes 5 auf den rückwärtigen Teil des Körpers 3 wird das Befestigungselement 5 soweit aufgeschoben, bis die beiden Spitzen des Formteils 9 gegen die Rückseite der Wandung drücken. Durch weiteres Schieben an den Druckpunkten 11 wird der untere Teil 5a des Befestigungselementes 5 gegen die Druckfedern 8 geschoben, bis der Anschlag 2 das keilförmige Formteil 9 an der Unterseite berührt. In dieser Stellung verrastet das Befestigungselement 5 über die Rasthaken 4 mit den entsprechenden Rastnasen des Körpers 3. Durch den Anschlag 2 kann somit aufgrund der Federhärte der Druckfedern 8 ein vorgegebener Druck zur Befestigung des Körpers 3 erzeugt werden. Die Größe des Drucks hängt dabei von der Federsteifigkeit der Druckfeder 8 und dem Federweg ab, der durch den Anschlag 2 vorgegeben wird.

Zum Lösen des Befestigungselementes 5 wird auf den unteren Teil des Befestigungselementes 5 entlang der vertikalen Achse 6 gemäß den beiden Pfeilspitzen (Figur 1) gedrückt. Dadurch heben sich die Rasthaken 4 von den Rastnasen 4a des Körpers 3 ab, so daß das Befestigungselement 5 nach hinten abgezogen werden kann. Nach dem Abziehen kann der Körper 3 nach vorne herausgenommen werden.

## Patentansprüche

1. Befestigungselement enthaltend einen in eine Bohrung einer Wandung durchsteckbaren Körper, mit zwischen dem Befestigungselement und dem Körper angeordneten, ineinandergreifenden Rasthaken und entsprechenden Vertiefungen, dadurch gekennzeichnet, daß wenigstens ein Teil des Befestigungselementes (5) elastisch und derart verformbar ausgebildet ist, daß sich die ineinandergreifenden Rasthaken (4) und Vertiefungen (4a) bei Druck auf den wenigstens einen Teils des Befestigungselementes (5) voneinander lösen, so daß das Befestigungselement vom Körper (3) abnehmbar ist.

2. Befestigungselement nach Anspruch 1, dadurch gekennzeichnet, daß die Rasthaken (4) vorzugsweise an zwei gegenüberliegenden Seiten des Umfangs des Befestigungselementes (5) angeordnet sind.

3. Befestigungselement nach Anspruch 1 oder 2, dadurch gekennzeichnet, daß das Befestigungselement (5) eine etwa elliptische Öffnung (13) für die Aufnahme eines etwa kreisförmigen Körpers (3) aufweist.

4. Befestigungselement nach Anspruch 3, dadurch gekennzeichnet, daß die Rasthaken (4) an den Enden des kleineren Durchmessers der elliptischen Öffnung (13) des Befestigungselementes (5) angeordnet sind.

5. Befestigungselement nach einem der vorhergehenden Ansprüchen, dadurch gekennzeichnet, daß das Befestigungselement (5) ein Formteil (9) aufweist, das über wenigstens zwei Druckfedern (8) mit einem unteren Teil (5a) an sich gegenüberliegenden Stellen verbunden ist.

6. Befestigungselement nach Anspruch 5, dadurch gekennzeichnet, daß das Formteil (9) derart keilförmig ausgebildet ist, daß seine beiden ineinanderliegenden Keilspitzen in Befestigungsrichtung zeigen und daß der Keilwinkel auf den maximal auftretenden Neigungswinkel zur Wandung (12) abgestimmt ist.

7. Befestigungselement nach Anspruch 6, dadurch gekennzeichnet, daß zwischen dem Formteil (9) und einem unteren Teil (5a) des Befestigungselementes (5) ein Begrenzungsabstand vorgegeben ist, der beim Aufschieben des Befestigungselementes (5) auf den Körper (3) als Anschlag (2) verwendbar ist.

8. Befestigungselement nach einem der vorhergehenden Ansprüche, dadurch gekennzeichnet, daß am unteren Teil (5a) wenigstens zwei Druckpunkte (11) vorgesehen sind.

9. Befestigungselement nach einem der vorhergehenden Ansprüche, dadurch gekennzeichnet, daß das Befestigungselement einteilig und/oder aus Kunststoff gefertigt ist.

10. Befestigungselement nach einem der vorhergehenden Ansprüche, dadurch gekennzeichnet, daß das Befestigungselement (5) zur Befestigung eines Ultraschallwandlers an einem Karosserieteil (12) eines Kraftfahrzeugs verwendbar ist.

## Claims

1. Fastening element containing a body which can be fitted into a bore of a wall, having interengaging latching hooks and corresponding depressions arranged between the fastening element and the body, characterized in that at least one part of the fastening element (5) is designed to be elastic and deformable such that, when pressure is exerted on the at least one part of the fastening element (5), the interengaging latching hooks (4) and depressions (4a) are released from one another, with the result that the fastening element can be removed from the body (3).

2. Fastening element according to Claim 1, characterized in that the latching hooks (4) are preferably arranged on two opposite sides of the circumference of the fastening element (5).

3. Fastening element according to Claim 1 or 2, characterized in that the fastening element (5) has an approximately elliptical opening (13) for receiving an approximately circular body (3).

4. Fastening element according to Claim 3, characterized in that the latching hooks (4) are arranged at the ends of the smaller diameter of the elliptical opening (13) of the fastening element (5).

5. Fastening element according to one of the preceding claims, characterized in that the fastening element (5) has a shaped part (9) which is connected, at opposite points, to a bottom part (5a) by at least two compression springs (8).

6. Fastening element according to Claim 5, characterized in that the shaped part (9) is designed in the form of a wedge such that its two adjacent wedge tips are oriented in the fastening direction, and in that the wedge angle is co-ordinated with the maximum angle of inclination with respect to the wall (12).

7. Fastening element according to Claim 6, characterized in that a limiting distance is predetermined between the shaped part (9) and a bottom part (5a) of the fastening element (5), it being possible for said distance to be used as a stop (2) when the fastening element (5) is pushed onto the body (3).

8. Fastening element according to one of the preceding claims, characterized in that at least two pressure points (11) are provided on the bottom part (5a).

9. Fastening element according to one of the preceding claims, characterized in that the fastening element is produced in a single piece and/or from plastic.

10. Fastening element according to one of the preceding claims, characterized in that the fastening element (5) can be used for fastening an ultrasonic transducer on a bodywork part (12) of a motor vehicle.

## Revendications

1. Elément de fixation comprenant un corps destiné à être engagé dans un perçage d'une paroi, des crochets de retenue et des cavités correspondantes, coopérant, entre l'élément de fixation et le corps,
caractérisé en ce qu'
au moins une partie de l'élément de fixation (5) est élastique et peut se déformer de façon que les crochets (4) et les cavités (4a), qui coopèrent, puissent se détacher l'un de l'autre par pression sur au moins une partie de l'élément de fixation (5), pour permettre d'enlever l'élément de fixation par rapport au corps (3).

2. Elément de fixation selon la revendication 1,
caractérisé en ce que
les crochets (4) sont prévus de préférence sur deux côtés opposés de la périphérie de l'élément de fixation (5).

3. Elément de fixation selon la revendication 1 ou 2,
caractérisé en ce que
l'élément de fixation (5) comporte une ouverture (13) sensiblement elliptique pour recevoir un corps sensiblement circulaire (3).

4. Elément de fixation selon la revendication 3,
caractérisé en ce que
les crochets (4) sont prévus aux extrémités de petits diamètres de l'ouverture elliptique (13) de l'élément de fixation (5).

5. Elément de fixation selon l'une quelconque des revendications précédentes,
caractérisé en ce qu'
il comporte une pièce moulée (9) reliée par au moins deux ressorts de compression (8) à la partie inférieure (5a), en deux points opposés.

6. Elément de fixation selon la revendication 5,
caractérisé en ce que
la pièce moulée (9) est en forme de coin pour que les deux pointes imbriquées du coin soient dirigées dans la direction de fixation et que l'angle du coin soit déterminé en fonction de l'angle d'inclinaison maximum que l'on peut avoir par rapport à la paroi (12).

7. Elément de fixation selon la revendication 6,
caractérisé en ce qu'
entre la pièce moulée (9) et une partie inférieure (5a) de l'élément de fixation (5) il est prévu une distance limite utilisable comme butée (2) lorsqu'on engage l'élément de fixation (5) sur le corps (3).

8. Elément de fixation selon l'une quelconque des revendications précédentes,
caractérisé en ce que
la partie inférieure (5a) comporte au moins deux points de pression (11).

9. Elément de fixation selon l'une quelconque des revendications précédentes,
caractérisé en ce que
l'élément de fixation est réalisé en une seule pièce et/ou en matière plastique.

10. Elément de fixation selon l'une quelconque des revendications précédentes,
caractérisé en ce que
l'élément de fixation (5) est destiné à fixer un convertisseur à ultrasons sur une partie de carrosserie (12) d'un véhicule automobile.
